(19) Europäisches Patentamt

European Patent Office

Office européen des brevets

(11) **EP 4 773 476 A1**

(12) **EUROPEAN PATENT APPLICATION**
published in accordance with Art. 153(4) EPC

(43) Date of publication:
**08.07.2026 Bulletin 2026/28**

(21) Application number: **24888543.6**

(22) Date of filing: **24.10.2024**

(51) International Patent Classification (IPC):
*H02K 1/278* (2022.01)     *B29C 70/32* (2006.01)
*B29C 70/68* (2006.01)     *H02K 15/02* (2025.01)
*H02K 15/035* (2025.01)

(52) Cooperative Patent Classification (CPC):
B29C 70/32; B29C 70/68; H02K 1/278;
H02K 15/02; H02K 15/035

(86) International application number:
**PCT/JP2024/037906**

(87) International publication number:
**WO 2025/100246 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.11.2023   JP 2023191406
22.03.2024   JP 2024046009**

(71) Applicant: **Toray Industries, Inc.
Tokyo 103-8666 (JP)**

(72) Inventors:
• **MIYAZAKI Yusuke
Iyo-gun, Ehime 791-3193 (JP)**
• **SANO Kentaro
Iyo-gun, Ehime 791-3193 (JP)**
• **HOSOKAWA Naofumi
Nagoya-shi, Aichi 455-8502 (JP)**
• **SUENAGA Kazumasa
Iyo-gun, Ehime 791-3193 (JP)**
• **SUETSUGU Kota
Nagoya-shi, Aichi 455-8502 (JP)**

(74) Representative: **Prüfer & Partner mbB
Patentanwälte · Rechtsanwälte
Sohnckestraße 12
81479 München (DE)**

(54) **ROTATING ELECTRIC MACHINE PROTECTIVE RING MANUFACTURING METHOD, ROTATING ELECTRIC MACHINE, AND ELECTRICALLY-DRIVEN MOBILITY EQUIPMENT**

(57)     An object is to provide a method of producing a rotor sleeve comprising a fiber-reinforced composite material, which is formed by winding materials around an outer side of a rotor constituting a rotating electrical machine, the method being capable of suppressing yarn breakage and bleeding of a resin composition during a material traveling process. A tensile stress P of 300 MPa or more and 4000 MPa or less is applied to a material including a resin composition and a reinforcing fiber bundle from a certain point in a traveling path of the material, and a region is provided in the path in which the tensile stress P is applied, the region satisfying $\Delta T < 30°C$, where $\Delta T$ is a difference between T and Tg represented by the following formula (I), T is a temperature of the material while the tensile stress P is applied, and Tg is a glass transition temperature of the resin composition included in the material:

$$(I) \quad \Delta T = T - Tg$$

【Fig. 2】

**Description**

TECHNICAL FIELD

The present invention relates to a method of producing a rotor sleeve usable for protecting a rotor of a rotating electrical machine such as a generator or a motor, and further relates to a rotating electrical machine, and an electric mobility device.

BACKGROUND ART

In recent years, in order to improve the performance of rotating electrical machines, high-speed rotation of rotating electrical machines has been required. Examples of rotating electrical machines include an SPM (Surface Permanent Magnet) type in which permanent magnets are arranged on the outer peripheral side of a rotor, and an IPM (Internal Permanent Magnet) type in which permanent magnets are embedded in a rotor. However, when such a rotating electrical machine is rotated at high speed, there is a possibility that the permanent magnets arranged on the outer periphery may fall off from the rotor due to centrifugal force, or the fallen permanent magnets may interfere with a stator arranged on the outer peripheral side of the rotor, causing damage to the rotor itself.

In order to suppress destruction or deformation of a rotating electrical machine associated with such high-speed rotation, Patent Document 1 describes a rotor for a motor configured to include a cylindrical body that covers the surface of a yarn-wound layer from the outside in the radial direction of a rotation axis, the yarn-wound layer being formed by winding yarn made of a reinforcing fiber material on a permanent magnet and being impregnated with a thermosetting resin composition. Further, it is described that such a yarn-wound layer is preferably wound by applying tension (for example, 3 kgf (about 29 N) or more) so as to prevent the yarn from unwinding.

Patent Document 2 describes a resistance application device used for manufacturing a pressure vessel, and a filament holding device, a filament winding device, and a filament winding method, each using the same. In such a resistance application device, the filament is wound around the outer periphery of a frictional resistance application member, whereby a method is described in which the filament is sent out in a state where high tension is applied and wound around a workpiece (core).

Patent Document 3 describes a rotor composed of a permanent magnet and a scattering prevention member mounted along its outer surface. It is a requirement that the tightening force of the scattering prevention member exceeds the centrifugal force of the permanent magnet, and it is described that deformation of the permanent magnet toward the outer diameter side can be suppressed by such tightening force. Further, such a scattering prevention member is produced by applying high tension (for example, 250 to 500 N) to a ribbon-like material of CFRP material, winding it around the rotor, and undergoing a heat curing treatment.

PRIOR ART DOCUMENTS

Patent Document

Patent Document 1: WO 2008/047767
Patent Document 2: JP 2005-238688 A
Patent Document 3: JP 2023-151124 A

SUMMARY OF INVENTION

Problems to be Solved by the Invention

In the invention described in Patent Document 1, since the permanent magnet is held by the cylindrical body, it was not necessary to apply high tension to the ring (the reinforcing fiber material constituting the yarn-wound layer). However, on the other hand, it was necessary to fix the cylindrical body to the annular member by shrink fitting. If sufficient tension to hold the permanent magnet were applied without a cylindrical body, yarn breakage would occur because the filament traveling along the yarn path could not withstand the tension. However, there is no description of a process design for countermeasures against this.

In the invention described in Patent Document 2, while filament winding is performed at approximately 5 kg/mm$^2$ (about 49 MPa) in a general pressure vessel, a tension 15 kg/mm$^2$ (about 147 MPa) higher than the conditions in such a general pressure vessel is applied. However, there is a problem that the tension is insufficient to hold the permanent magnets when the motor rotates at high speed, and as a result, the rotation speed is suppressed. Furthermore, there is no description of a process design from the viewpoint of reducing yarn breakage when applying even higher tension.

In the invention described in Patent Document 3, a CFRP material is wound around a rotor in a state where high tension is applied in order to suppress deformation of the permanent magnet toward the outer diameter side. However, similar to Patent Documents 1 and 2, there is no description of material or process design for reducing yarn breakage when applying high tension.

The present invention is to improve such drawbacks of the prior art, and has found that there is a problem in winding a material including a resin composition and a reinforcing fiber bundle around the outside of a rotor constituting a rotating electrical machine with a tension of a certain level or more when producing a rotor sleeve. It is an object of the present invention to provide a method of producing a rotor sleeve that enables the material to be normally wound around the rotor even under high tension, suppresses displacement occurring during operation, and consequently enables improvement of single output density of the rotating electrical machine, a rotating electrical machine having the rotor sleeve obtained by such a production method, and an electric mobility device.

MEANS FOR SOLVING THE PROBLEMS

As a result of intensive studies to solve the above problems, the present inventors have found a method of producing a rotor sleeve having any of the following configurations, a rotating electrical machine having a rotor sleeve obtained by such a production method, and an electric mobility device, and have completed the present invention.

(1) A method of producing a rotor sleeve, comprising: applying tensile stress to a material including a resin composition and a reinforcing fiber bundle, causing the material to travel along a predetermined path, and then winding the material annularly a plurality of times to form a cylindrical laminate,

wherein a tensile stress P of 300 MPa or more and 4000 MPa or less is applied to the material from a certain point in the path, and
the path in which the tensile stress P is applied includes a region satisfying $\Delta T < 30°C$, where $\Delta T$ is a difference between T and Tg represented by the following formula (I), T is a temperature of the material while the tensile stress P is applied, and Tg is a glass transition temperature of the resin composition included in the material:

$$(I)\ \Delta T = T - Tg$$

(2) The method of producing a rotor sleeve according to (1), wherein the tensile stress P is in a range of 300 MPa or more and 3300 MPa or less.
(3) The method of producing a rotor sleeve according to (1), wherein the tensile stress P is in a range of 300 MPa or more and 2700 MPa or less.
(4) The method of producing a rotor sleeve according to any of (1) to (3), wherein the condition $\Delta T < 30°C$ is satisfied in the entire path in which the tensile stress P is applied.
(5) The method of producing a rotor sleeve according to any of (1) to (4), wherein while the tensile stress P is applied, a complex viscosity of the resin composition included in the material is $10^4$ Pa·s or more and $10^8$ Pa·s or less.
(6) The method of producing a rotor sleeve according to any of (1) to (5), comprising a stress application step of increasing the tensile stress to a desired tensile stress P.
(7) The method of producing a rotor sleeve according to (6), wherein at least a part of the material is cooled to 20°C or less prior to the stress application step and/or during the stress application step.
(8) A rotating electrical machine comprising a rotor and a rotor sleeve,

wherein the rotor sleeve is formed by winding a material including a resin composition and a reinforcing fiber bundle annularly a plurality of times around the rotor to form a cylindrical laminate having an outer diameter of 6 cm or more and 23 cm or less, and
a rate of change in outer diameter when operated at a rotation speed of 10,000 rpm is 0.1% or less.

(9) The rotating electrical machine according to (8), having a single output density of 8 kW/kg or more.
(10) An electric mobility device equipped with the rotating electrical machine according to (9).

EFFECTS OF INVENTION

In the method of producing a rotor sleeve according to the present invention, a predetermined tensile stress P is applied to a material including a resin composition and a reinforcing fiber bundle for forming a cylindrical laminate. By controlling the relationship between the temperature T of the material while the tensile stress P is being applied and the glass transition temperature Tg of the resin composition contained in the material, it is possible to apply the required high tensile stress and suppress yarn breakage that occurs during the travel process of the material due to the application of tensile stress above a certain level.

Further, in the present invention, by setting the tensile stress P within a more preferable range, it becomes possible to suppress not only yarn breakage but also squeezing out or bleeding of a resin composition during the travel process, including the path until the start of winding the material. Specifically, when a tape-like material is generally unwound from a bobbin such as a paper tube, a phenomenon may occur in which the resin composition is squeezed out from the tape-like material if a certain tension is applied, even if it is not a high tension. Due to this phenomenon, the content of the resin composition tends to be higher in the tape-like material located on the outer peripheral side than in the tape-like material located on the bobbin side. Furthermore, for example, when entering a stress application mechanism (described later) installed in the travel path, if a certain tension is applied to the tape-like material, the tape-like material is pressed against a jig constituting the mechanism, resulting in bleeding of a resin composition. Therefore, in a state immediately before being wound around the rotor sleeve, variations in the content of the resin composition in the tape-like material are likely to occur. Thus, if the difference in the content of the resin composition in the tape-like material is large or if the content becomes unstable, it causes thickness unevenness or variations in physical properties when a rotor sleeve is produced by winding the tape-like material around a rotor or the like and heat-curing it. However, in the present invention, by controlling the relationship between the temperature T of the material while the tensile stress P is being applied and the glass transition temperature Tg of the resin composition contained in the material while maintaining the tensile stress P in a more preferable range, the above-mentioned phenomenon can be suppressed, and unevenness in the resin composition content in the tape-like material can be suppressed.

The rotor sleeve obtained by the present invention suppresses the displacement of the ring during the operation of the rotating electrical machine, and therefore, in the rotating electrical machine and an electric mobility device equipped with the rotating electrical machine, the single output density can be further improved.

BRIEF DESCRIPTION OF THE DRAWINGS

Fig. 1 is a perspective view of a rotor sleeve according to an embodiment of the present invention.
Fig. 2 is a schematic view of an apparatus for producing a rotor sleeve according to an embodiment of the present invention.
Fig. 3 is a schematic view of an apparatus for producing a rotor sleeve provided with a cooling mechanism according to an embodiment of the present invention.

MODE FOR CARRYING OUT INVENTION

(Configuration of Rotor Sleeve)

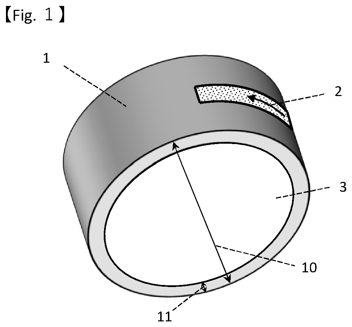

As shown in Fig. 1, the rotor sleeve of the present invention is formed as a cylindrical laminate 1 by winding a material containing a resin composition and a reinforcing fiber bundle annularly a plurality of times around a member to be finally tightened, such as a rotor of a rotating electrical machine, as a core 3. The material containing the resin composition and the reinforcing fiber bundle (hereinafter sometimes referred to as "fiber-reinforced composite material" or simply "material") may be a tape-like material formed by impregnating reinforcing fibers with a resin composition. The tape-like material may be wound continuously from the beginning to the end of winding, or may be wound intermittently a plurality of times. In the present invention, the laminate 1 may represent an embodiment after the fiber-reinforced composite material is wound and laminated and further molded, or may represent an embodiment in which the fiber-reinforced composite material is merely wound and laminated, i.e., an embodiment in the production process before molding. In addition, the term "cylindrical" is not limited to a cylindrical body having a perfectly circular cross section, but also includes one having minute irregularities due to a reinforcing fiber bundle or the like on the surface.

The type of the reinforcing fiber bundle is not particularly limited, and glass fiber, carbon fiber, aramid fiber, boron fiber, alumina fiber, silicon carbide fiber, and the like can be used. Two or more of these fibers may be used in combination. From the viewpoint of obtaining a lightweight and highly rigid fiber-reinforced composite material, it is preferable to use carbon fiber. Examples of the number of fibers constituting the fiber bundle include 1,000 to 50,000. The strand strength, which is the strength of the carbon fiber as a bundle, is preferably 4,000 MPa or more. Although there is no upper limit, one having a strength of 8,000 MPa or less can be used. The method for measuring the strand strength will be described later in the Examples.

The resin composition used for the fiber-reinforced composite material is not particularly limited, and thermosetting resins such as epoxy resins, unsaturated polyester resins, phenol resins, vinyl ester resins, and cyanate ester resins can be used in an uncured state. Two or more of these resins may be used in combination.

When an epoxy resin composition is used as the resin composition in the present invention, it preferably contains the following components [A] and [B] as essential components. Although component [C] is not essential, it is preferably included when adjusting the tackiness or complex viscosity of the resin composition. In the present invention, the "component" means a compound contained in the composition.

Component [A]: Epoxy resin

Component [B]: Curing agent that reacts with component [A]

Component [C]: Thermoplastic resin.

Examples of the component [A] include epoxy resins such as diaminodiphenylmethane type, diaminodiphenylsulfone type, aminophenol type, bisphenol type, meta-xylenediamine type, 1,3-bisaminomethylcyclohexane type, isocyanurate type, hydantoin type, phenol novolac type, ortho-cresol novolac type, dicyclopentadiene type, tris(hydroxyphenyl)methane type, and tetraphenylolethane type.

Commercial products of the diaminodiphenylmethane type epoxy resin include ELM434 (manufactured by Sumitomo Chemical Co., Ltd.), ELM434VL (manufactured by Sumitomo Chemical Co., Ltd.), "Araldite (registered trademark)" MY720 (manufactured by Huntsman Advanced Materials), "Araldite (registered trademark)" MY721 (manufactured by Huntsman Advanced Materials), "Araldite (registered trademark)" MY9512 (manufactured by Huntsman Advanced Materials), "Araldite (registered trademark)" MY9663 (manufactured by Huntsman Advanced Materials), and "Epotohto (registered trademark)" YH-434 (manufactured by NIPPON STEEL Chemical & Material Co., Ltd.).

Commercial products of the diaminodiphenylsulfone type epoxy resin include TG3DAS (manufactured by Mitsui Chemicals Fine, Inc.).

Commercial products of the aminophenol type epoxy resin include ELM120 (manufactured by Sumitomo Chemical Co., Ltd.), ELM100 (manufactured by Sumitomo Chemical Co., Ltd.), "jER (registered trademark)" 630 (manufactured by Mitsubishi Chemical Corporation), "Araldite (registered trademark)" MY0500 (manufactured by Huntsman Advanced Materials), "Araldite (registered trademark)" MY0510 (manufactured by Huntsman Advanced Materials), "Araldite (registered trademark)" MY0600 (manufactured by Huntsman Advanced Materials), "Araldite (registered trademark)" MY0610 (manufactured by Huntsman Advanced Materials), and the like.

The bisphenol type epoxy resins include bisphenol A type epoxy resin and bisphenol F type epoxy resin.

Commercial products of the bisphenol A type epoxy resin include "jER (registered trademark)" 825 (manufactured by Mitsubishi Chemical Corporation), "jER (registered trademark)" 828 (manufactured by Mitsubishi Chemical Corporation), "Epiclon (registered trademark)" 850 (manufactured by DIC Corporation), "Epotohto (registered trademark)" YD-128 (manufactured by Tohto Kasei Co., Ltd.), DER-331 (manufactured by Dow Chemical Company), and DER-332 (manufactured by Dow Chemical Company).

Commercial products of the bisphenol F type epoxy resin include "Araldite (registered trademark)" GY282 (manufactured by Huntsman Advanced Materials), "jER (registered trademark)" 806, "jER (registered trademark)" 807, "jER (registered trademark)" 1750 (all manufactured by Mitsubishi Chemical Corporation), "Epiclon (registered trademark)" 830 (manufactured by DIC Corporation), and "Epotohto (registered trademark)" YD-170 (manufactured by Tohto Kasei Co., Ltd.).

In the present invention, epoxy compounds other than the above may be appropriately blended into the epoxy resin composition.

Examples of the component [B] include amine-based curing agents, alcohol compounds, phenol compounds, cationic curing agents, anionic curing agents, radical curing agents, acid anhydride compounds, and imidazole compounds. Examples of the amine-based curing agent include dicyandiamide or derivatives thereof, diaminodiphenylsulfone or derivatives thereof, and the like. Here, dicyandiamide can control the reactivity of the curing reaction induced by using it in combination with a urea amine-based curing agent or a urea compound. Since a curing accelerator containing these urea compounds or the like reacts with the component [A], it is regarded as a curing agent in the present invention and is included in the examples of the component [B]. Examples of the urea compound include 3-(3,4-dichlorophenyl)-1,1-dimethylurea (DCMU99), 3-(4-chlorophenyl)-1,1-dimethylurea, phenyldimethylurea, and toluene bis(dimethylurea).

Commercial products of dicyandiamide include DICY-7 and DICY-15 (all manufactured by Mitsubishi Chemical Corporation). Diaminodiphenylsulfone has structural isomers depending on the position of the amino group. Commercial products of 4,4'-diaminodiphenylsulfone include "Seikacure (registered trademark)"-S (manufactured by Wakayama Seika Kogyo Co., Ltd.), "Sumicure (registered trademark)" S (manufactured by Sumitomo Chemical Co., Ltd.), and the like. Commercial products of 3,3'-diaminodiphenylsulfone include 3,3'-DAS (manufactured by Mitsui Chemicals Fine, Inc.).

Examples of the component [C] include polyamide, polycarbonate, polyacetal, polyphenylene oxide, polyphenylene sulfide, polyarylate, polyester, polyamideimide, polyimide, polyetherimide, polyimide having a phenyltrimethylindane structure, polysulfone, polyethersulfone, polyetherketone, polyetheretherketone, polyaramid, polyethernitrile, polybenzimidazole, polyvinyl alcohol, polyvinyl acetal, polyvinyl formal, polyvinyl acetoacetal, polyvinyl butyral, polyvinyl acetate, hydrogenated bisphenol A/pentaerythritol phosphite polymer, hydrogenated terpene, hydrogenated terpene phenol, and the like.

Commercial products of the component [C] (thermoplastic resin) include, for example, polyethersulfone commercial products such as "Sumikaexcel (registered trademark)" PES3600P, "Sumikaexcel (registered trademark)" PES5003P, "Sumikaexcel (registered trademark)" PES5200P, "Sumikaexcel (registered trademark)" PES7600P (all manufactured by Sumitomo Chemical Co., Ltd.), "VIRANTAGE (registered trademark)" VW-10700RFP (manufactured by Solvay Advanced Polymers), copolymer oligomers of polyethersulfone and polyetherethersulfone, and polyetherimide commercial products such as "Ultem (registered trademark)" 1000, "Ultem (registered trademark)" 1010, "Ultem (registered trademark)" 1040 (all manufactured by SABIC Innovative Plastics), and other thermoplastic resins such as "J-POVAL (registered trademark)" (manufactured by Japan Vam & Poval Co., Ltd.), "Vinylec (registered trademark)" (manufactured by JNC Corporation), "S-LEC (registered trademark)" (manufactured by Sekisui Chemical Co., Ltd.), "Ultrasen (registered trademark)" (manufactured by Tosoh Corporation), JPH-3800 (manufactured by Johoku Chemical Co., Ltd.), and YS Polyster UH130 (manufactured by Yasuhara Chemical Co., Ltd.).

The rotor sleeve in the present invention preferably comprises a laminate 1 formed by winding a tape-like material comprising a reinforcing fiber bundle impregnated with a resin composition, annularly a plurality of times.

As such a tape-like material, a prepreg slit tape or towpreg in which a reinforcing fiber bundle is previously impregnated with a resin composition may be used, or a tape-like material in which a reinforcing fiber bundle is impregnated with a resin composition in the production process of the laminate 1 by a technique such as filament winding may be used.

The width of the tape-like material is not particularly limited, but it is preferable to use one having a width of 1 mm to 20 mm because it becomes easy to form a laminate by winding.

The rotor sleeve of the present invention preferably has an outer diameter (reference numeral 10 in Fig. 1) of 1 cm to 25 cm, more preferably 6 to 23 cm, and still more preferably 8 to 20 cm. Further, when the thickness of the ring (reference numeral 11 in Fig. 1) is 0.1 mm to 5.0 mm, the effect of suppressing the displacement of the rotor sleeve is enhanced, and the single output density of the rotating electrical machine can be further improved, which is preferable. The upper limit of the thickness is more preferably 3 mm or less, and still more preferably 1.5 mm or less.

(Method of Producing Rotor Sleeve)

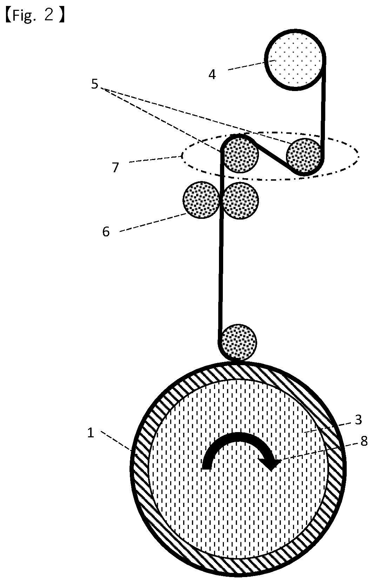

In the present invention, the rotor sleeve comprises a cylindrical laminate 1 made of a material containing a resin composition and reinforcing fibers. In its production apparatus, as illustrated in Fig. 2, a predetermined path is formed by devices (path configuration devices) mainly constituting paths such as rolls and guides from a bobbin 4 on which the material containing the resin composition and the reinforcing fiber bundle is wound to the starting point of winding on the core 3. In the present invention, such a predetermined path is not necessarily limited to a single path, and may be various configurations by combining path configuration devices according to the purpose. In the method of producing the laminate 1, the material is unwound from the bobbin 4, caused to travel along the predetermined path while being in contact with rolls, guides, and the like, and then wound annularly a plurality of times around the core 3 to form the laminate 1. The travel speed of the material is preferably 1 to 5 cm per second. In the present invention, a tensile stress in a range described later is applied to the material in a path from a certain point (including a point where the travel starts) in the path until the traveling material reaches the starting point of the winding to the starting point of the winding. Here, the application of the tensile stress to the material can be performed using a stress application mechanism 7 shown in Fig. 2 and the like.

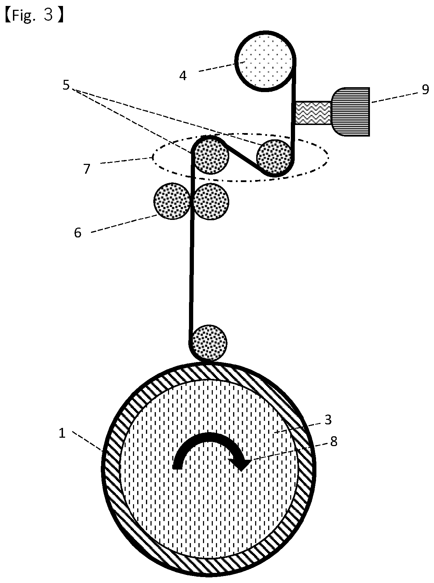

The configuration of the stress application mechanism 7 is not particularly limited, but examples thereof include torque application to the bobbin 4 by a brake or the like, frictional resistance application to the material at multistage rolls 5, and frictional resistance application to the material at nip rolls 6. Figs. 2 and 3 show examples in which a stress application mechanism 7 using multistage rolls 5 is provided in a path from the bobbin 4 to the core 3, and the tension applied to the traveling material increases each time it passes through each roll of the multistage rolls.

The bobbin 4 is the material wound around an inner tube in a bobbin configuration. A film may be attached to the inner peripheral side of the material in order to separate the material from the bobbin without resistance. Further, a metal may be used for the inner tube of the bobbin.

As described above, the path configuration devices are mainly rolls and guides, and include those that contact the material to determine its travel path. The rolls include both free rolls and drive rolls. However, the path configuration devices are not limited only to rolls and guides. The stress application mechanism 7 described above can serve as a path configuration device. On the other hand, measuring instruments such as a tensiometer and a speedometer usually do not determine the travel path of the material even if they may contact the material in the travel path; therefore, they are not included in the above configuration devices unless it is clear that they determine the travel path of the material.

The tensile stress (MPa) in the present invention can be calculated by dividing the tension applied to the material including the resin composition and the reinforcing fiber bundle by the cross-sectional area of the material. For example, in the case of a tape-like material, it is determined by dividing the tension (N) applied to the tape-like material by the product of the thickness A (mm) and the width B (mm) of the tape-like material. Regarding the thickness A (mm) and width B (mm) of the tape-like material, a 1 m length is sampled, the thickness (mm) and width (mm) are measured at 10 locations every 10 cm in the longitudinal direction using a micrometer or a ruler, and the average values thereof are obtained by rounding to two decimal places.

In the present invention, in order to prevent deformation of the core 3 during rotation, a predetermined range of tensile stress P is applied to the material from a certain point in the predetermined path (the path from the bobbin to the starting point of winding the material on the core 3). The "certain point" here may include a point where the material starts to travel (in the above configuration, the point where the material is unwound from the bobbin 4 and starts to travel). Note that if the stress applied to the material, after once falling within the predetermined range of tensile stress, falls outside the predetermined range and then return to within the predetermined range again, or if this is repeated, two or more points at which the stress falls within the predetermined range become the "certain point."

The tensile stress P in the predetermined range is expressed by several patterns including preferred embodiments, but the common technical idea in the present invention is to apply a predetermined tensile stress P to the material to cause the material to travel along a predetermined path, while suppressing yarn breakage of the yarns contained in the material and bleeding of a resin composition.

In order to suppress yarn breakage, the main tension range of the tensile stress P falls under any of the following patters: (1) a tensile stress of 300 MPa or more and 4000 MPa or less; (2) a tensile stress of 300 MPa or more and 3300 MPa or less; and (3) a tensile stress of 300 MPa or more and 2700 MPa or less.

Regarding the tensile stress P within the range of 300 MPa or more and 4000 MPa or less in (1) (the tensile stress in the above range is hereinafter referred to as "tensile stress 300-4000," and hereinafter similarly expressed using the lower limit value - upper limit value of the stress), the tension applied when the material travels along the path may be an ultra-high tension of 4000 MPa. In the path where such tensile stress 300-4000 is applied to the material, the relationship between the temperature T of the traveling material and the Tg of the resin composition contained in the material is defined as described later in the present invention. The range of the tensile stress P is preferably 300 MPa or more and 3700 MPa or less (tensile stress 300-3700). The preferred complex viscosity of the resin composition is as described later.

In the above (2) expressing a preferred embodiment, the predetermined range of the tensile stress P is 300 MPa or more and 3300 MPa or less (tensile stress range 300-3300). The range of the tensile stress P is more preferably 300 MPa or more and 3000 MPa or less (tensile stress 300-3000). Further, as in the above (3), it is also conceivable to set the range to 300 MPa or more and 2700 MPa or less (tensile stress 300-2700).

The lower limit of the tensile stress P is 300 MPa or more. However, when a resin composition that is relatively unlikely to cause bleeding of a resin composition (described later) is used, the tensile stress may be relatively high. Therefore, from the viewpoint of suppressing displacement occurring during operation of the rotor, the lower limit is preferably 350 MPa or more, more preferably 400 MPa or more, even more preferably 450 MPa or more, and most preferably 500 MPa or more.

When the lower limit is 400 MPa, there are patterns in which the lower limit is combined with any of 4000 MPa, 3700 MPa, 3300 MPa, 3000 MPa, and 2700 MPa as the upper limit, which may be described as tensile stress 400-4000, tensile stress 400-3700, tensile stress 400-3300, tensile stress 400-3000, and tensile stress 400-2700, respectively. The same applies to cases where the lower limit is 350 MPa, 450 MPa, and 500 MPa.

To apply such tensile stress, in the production method according to the present invention, it is preferable to apply a desired stress among the above-mentioned tensile stresses to the material traveling along the path. As this method, for example, as shown in Figs. 2 and 3, there is a method of gradually applying tensile stress to the traveling material using the multistage rolls 5 and the nip rolls 6. As another method of applying tensile stress, there is a method of applying torque to the bobbin 4 by a brake or the like.

The present inventors have found that even when the same resin composition is used, if the temperature of the material traveling along the path is lowered, complex viscosity is improved by suppressing the motion of molecules contained in the components of the resin composition, and yarn breakage can be suppressed, and bleeding of the resin composition can also be suppressed. On the other hand, they found a phenomenon that even when the temperature of the material traveling along the path is the same, if the glass transition temperature of the resin composition contained in the material is a certain level or higher, yarn breakage can be suppressed and bleeding of the resin composition can be suppressed. From such a viewpoint, in the present invention, when the tensile stress described above is applied, the difference $\Delta T$ between T and Tg represented by the following formula (I) is made to satisfy $\Delta T < 30°C$, where T is the temperature of the material in the path in the range where the tensile stress is applied, and Tg is the glass transition temperature of the resin composition. It is preferably $\Delta T < 25°C$, and more preferably $\Delta T < 15°C$.

$$(I) \quad \Delta T = T - Tg$$

The temperature T of the material is determined by measuring the material traveling along the path with a contact-type thermometer or a non-contact-type thermometer. Here, when the temperature of the material changes depending on the position of the path, it refers to the temperature at the position showing the highest temperature. Such a temperature is preferably 0°C or more and 50°C or less, and more preferably 10°C or more and 40°C or less.

Further, from the above-mentioned viewpoint, in the present invention, as shown in Fig. 3, it is preferable to cool the material from a higher temperature state to 20°C or less by the cooling mechanism 9 in the stress application step. For example, when using a resin composition having a Tg of 5°C, the temperature of the material in the path is preferably lower than 35°C. When using a resin composition having a Tg of -20°C, it is preferable to make the temperature T of the material in the path lower than 10°C by the cooling mechanism 9 as shown in Fig. 3. If $\Delta T$ is 30°C or more, breakage of the material, yarn breakage of fibers, and bleeding of a resin composition may occur. The lower limit of the Tg is preferably -30°C, and more preferably -15°C. The upper limit of the Tg is not particularly limited, but Tg of a resin composition generally used for prepregs and the like is up to 60°C. Since the temperature of the material in the path is preferably 0°C or more, $\Delta T$ in this case is -60°C. That is, it is preferable that $-60°C < \Delta T < 30°C$. Here, the Tg of the resin composition can be evaluated by differential scanning calorimetry (DSC) by raising the temperature from -50°C to 300°C at 5°C to 10°C/min. When performing measurement by DSC, a tape-like material may be used as a sample if it can be confirmed that the reinforcing fibers do not affect the measurement and do not decrease its accuracy.

The range in which $\Delta T$ is less than 30°C may be partial in the path where the tensile stress P is applied, but it is preferable that $\Delta T < 30°C$ in the entire path. When $\Delta T < 30°C$ in the entire path where the tensile stress P is applied, yarn breakage during travel becomes even less likely to occur.

As the cooling mechanism 9, a spot cooler or the like may be employed to directly cool the material, or a chiller may be employed to cool the path configuration device and the material may be cooled via the path configuration device. It is preferable to cool at least a part of the material to 20°C or less prior to the stress application step and/or during the stress application step by such a cooling mechanism or the like.

In the present invention, in order to prevent breakage and partial yarn breakage of the material, the complex viscosity of the resin composition is preferably $10^4$ Pa·s or more, and more preferably $10^5$ Pa·s or more in the path in the range where the tensile stress is applied. Further, the complex viscosity of the resin composition is preferably $10^8$ Pa·s or less, and more preferably $10^7$ Pa·s or less, due to its limit. When the material is caused to travel at high tension, if the complex viscosity is less than $10^4$ Pa·s, yarn breakage and bleeding of the resin composition during the production process of the cylindrical laminate 1 tend to increase. The complex viscosity of the resin composition contained in the material can be measured with respect to the resin composition before being impregnated into the fiber bundle using a viscoelasticity measuring device (a device that measures by sandwiching a measurement object between upper and lower measurement jigs, for example, ARES manufactured by TA Instruments). It is determined by using flat parallel plates with a diameter of 40 mm for the upper and lower measurement jigs, setting the resin composition contained in the material between the upper and lower jigs so that the distance between the upper and lower jigs is 1 mm, and then measuring in a torsion mode under conditions of a heating rate of 1 to 5°C/min and a frequency of 0.5 Hz. Here, the complex viscosity refers to the complex viscosity at temperature T in the path in the range where the tensile stress according to the present invention is applied to the material, in a curve of complex viscosity versus temperature obtained by measurement.

Next, the material including the resin composition and the reinforcing fibers, after traveling along a predetermined path, is guided to the core 3 in order to be wound annularly a plurality of times to form a cylindrical laminate. The core 3 is a member, such as a rotor of a rotating electrical machine to be finally tightened by the material.

The laminate 1 may be formed by repeatedly winding the material including the resin composition and the reinforcing fibers in the 0° direction with the circumferential direction of the core 3 shown in Figs. 2 and 3 as a reference (0°), that is, by overlapping and winding the material at the same height position when the bottom surface of the core 3 is placed downward, or by winding the material in a spiral shape by changing the angle from the reference direction. At this time, in the embodiment shown in Figs. 2 and 3, winding can be performed by rotating the core 3 in the direction of arrow 8.

Thereafter, heat and pressure are applied to the laminate 1 by a technique such as autoclave molding or wrap tape molding to cure the resin composition, whereby a rotor sleeve can be obtained.

(Rotating Electrical Machine)

A rotating electrical machine according to the present invention has a rotor and a rotor sleeve. As described above, the rotor sleeve is formed as a cylindrical laminate by winding a material including a resin composition and a reinforcing fiber bundle around the rotor annularly a plurality of times, and as a result, the rotor sleeve is mounted around the rotor. In order to produce such a rotor sleeve, the production method described above is suitably used. In such a rotating electrical machine, when the rotor sleeve mounted on the rotor has an outer diameter of 6 cm or more and 23 cm or less, the rate of change in outer diameter when the rotating electrical machine is operated at a rotation speed of 10,000 rpm can be 0.1% or less, and the rate of change in outer diameter is preferably 0.09% or less, more preferably 0.08% or less, and particularly preferably 0.07% or less.

With this technology, deformation of the permanent magnet toward the outer diameter side during high-speed rotation is suppressed, and further higher speed rotation becomes possible, so that the output or output density of such a rotating electrical machine is improved. The single output density, which is the density of output that such a rotating electrical machine can generate alone, is preferably 8 kW/kg or more, more preferably 10 kW/kg or more, and those of 30 kW/kg or less are used.

(Electric Mobility Device)

Furthermore, in the present invention, it is also possible to provide an electric mobility device equipped with such a rotating electrical machine. The electric mobility device here includes electric vehicles, electric aircraft, electric ships, and the like, but is not limited thereto as long as it is a mobility device driven by a rotating electrical machine. In a rotating electrical machine for electric mobility, a rotating electrical machine having a larger outer diameter and higher rotation than those for home appliance applications is required in order to increase output. Since the output density of the rotating electrical machine is improved and weight reduction and miniaturization are possible, the electric mobility device of the present invention can be expected to improve cruising range and design flexibility as an electric mobility device.

(Method of Calculating Displacement during Rotation of Rotating Electrical Machine)

The rate of change in outer diameter of the rotor sleeve can be determined by a rotation test of the rotating electrical machine. In the rotation test of the rotating electrical machine, the rotating electrical machine is rotated from a stationary state, and the rotation speed is gradually increased; after reaching 10,000 rpm, the rotation speed is held for 20 seconds or more. Here, the rate of change in outer diameter of the rotor sleeve is defined as a value obtained by multiplying by 100 the ratio of displacement amount of the outer diameter measured when the rotating electrical machine is held for 20 seconds after reaching 10,000 rpm in the rotation test (displacement amount during rotation test) to the outer diameter of the rotor sleeve before rotation of the rotating electrical machine (ring outer diameter before rotation). The outer diameter of the rotor sleeve before rotation of the rotating electrical machine can be measured using a diameter tape. The displacement amount of the outer diameter during the rotation test can be determined by measuring at the time when 20 seconds have elapsed after the rotation speed reaches 10,000 rpm using a laser displacement meter while rotating the rotating electrical machine, and reading the average value of each displacement amount in the circumferential direction. Note that the sensitivity of measurement of the laser displacement meter can be increased by applying a paint to the surface of the rotor sleeve. The measurement points for the outer diameter of the ring before rotation and the displacement amount during the rotation test are each the center point of equally divided line segments in the rotation axis direction, the line segments being obtained by dividing the distance from one end to the other end in the width direction of the ring into six equal parts at an arbitrary position in the circumferential direction of the rotor sleeve. The average value of the outer diameters measured at these six center points before rotation is taken as the outer diameter of the ring before rotation, and the average value of the displacement amounts measured at these six center points during the rotation test is taken as the displacement amount during the rotation test. As a rotating means, although not particularly limited, a spin tester can be used as long as it can stably rotate the rotating electrical machine to a predetermined rotation speed.

Further, the output density of the rotating electrical machine is calculated by dividing the output of the rotating electrical machine by the weight of the rotating electrical machine. The output of the rotating electrical machine is in turn represented by the product of the rotation speed and the torque. The rotation speed and torque are measured by a general method such as using a motor bench.

EXAMPLES

Specific production examples and comparative examples of the forming method for the rotor sleeve of the present invention are described below.

(Example 1)

In this example, an epoxy resin composition consisting of the following components was used as the resin composition.

Component [A]: Among the epoxy resins, 9.2 parts by mass of "jER (registered trademark)" 828, 10 parts by mass of "jER (registered trademark)" 1001, 25 parts by mass of "jER (registered trademark)" 1007, and 40.8 parts by mass of "Epiclon (registered trademark)" 830 were used as [A1] bisphenol type; and 15 parts by mass of "Epiclon (registered trademark)" HP7200H was used as [A2] dicyclopentadiene type.

Component [B]: 4.5 parts by mass of DICY7 and 3 parts by mass of DCMU99 were used as a curing agent to react with component [A].

Component [C]: 2 parts by mass of "Vinylec (registered trademark)" K was used as a thermoplastic resin.

The complex viscosity of this epoxy resin composition was measured using a viscoelasticity measuring device (ARES, manufactured by TA Instruments). Using flat parallel plates with a diameter of 40 mm for the upper and lower measurement jigs, the epoxy resin composition was set between the upper and lower jigs so that the distance between them was 1 mm. Measurement was then performed in a torsion mode under conditions of a heating rate of 1.7°C/min and a frequency of 0.5 Hz. As a result, the complex viscosity at 25°C was $2 \times 10^5$ Pa·s.

Next, this epoxy resin composition was impregnated into a sheet-like material obtained by opening a plurality of carbon fiber bundles ("Torayca (registered trademark)" T800S-12K) to obtain a prepreg with a fiber areal weight of 125 g/m$^2$ and a resin content of 24% by mass. This was slit to obtain a slit tape with a width of 7 mm (tape-like material). When the Tg of the epoxy resin composition was measured for this slit tape, evaluation by differential scanning calorimetry (DSC) with a temperature increase from -50°C to 300°C at 5°C/min showed the Tg to be 3°C. The T800S-12K used in this example had a strand strength of 5880 MPa.

The strand strength was determined according to the resin-impregnated strand test method of JIS-R-7608 (2004) following the procedure below. The formulation of the resin for impregnation was "Celoxide (registered trademark)" 2021P (manufactured by Daicel Chemical Industries, Ltd.) / boron trifluoride monoethylamine (manufactured by Tokyo Chemical Industry Co., Ltd.) / acetone = 100/3/4 (parts by mass). Curing conditions used were atmospheric pressure, a temperature of 125°C, and a time of 30 minutes. The strength of 10 strands of carbon fiber bundles impregnated with the resin was measured, and the average value was taken as the strand strength.

To simulate the yarn path when the tape-like material travels through the path configuration device, an Instron Universal Testing Machine (manufactured by Instron Corporation) was used in a 25°C environment. Both ends of the tape-like material in the longitudinal direction were firmly gripped with chucks (the gripped portions are referred to as "gripped parts"). The crosshead speed was set to 2.5 mm/min, the distance between the gripped parts was 100 mm, and the number of samples was N = 3. After measuring the temperature of the tape-like material with a contact-type thermometer and confirming it was 25°C, tensile stress applied to the tape-like material was gradually increased from 0 MPa up to 2500 MPa. The tensile stress in this example was calculated according to the "Method for calculating tensile stress" described above.

When the tensile stress of 2500 MPa was applied, the presence or absence of partial yarn breakage of the tape-like material was evaluated. As a result, no partial yarn breakage occurred.

Further, the tape-like material described in this example was wound halfway around the outer periphery of a roller made of SUS304 with an outer diameter of 82 mm. After confirming that the temperature of the tape-like material was 25°C, a weight of 200 g was hung on one end of the tape-like material and a tensiometer was hung on the other end. In this state, tensile stress was gradually increased manually from 0 MPa up to 420 MPa. At this time, it was visually confirmed that no bleeding of a resin composition from the tape-like material occurred on the roller surface.

Since the tape-like material can be wound around the outer periphery of a rotor constituting a rotating electrical machine under high tensile stress, it was demonstrated that it is possible to produce a rotor sleeve capable of suppressing displacement occurring during rotation.

(Example 2)

The complex viscosity of the epoxy resin composition described in Example 1 was measured using the same measuring device and method as in Example 1. As a result, the complex viscosity at 14°C was $8 \times 10^6$ Pa·s.

Using the same testing machine as in Example 1, the tape-like material described in Example 1 was cooled to 14°C by a cooling mechanism. When tensile stress applied to the tape-like material was gradually increased from 0 MPa up to 2900 MPa, the presence or absence of partial yarn breakage of the tape-like material was evaluated. As a result, no partial yarn breakage occurred.

Furthermore, using the tape-like material described in Example 1 and cooling it to 14°C by a cooling mechanism, the presence or absence of bleeding of a resin composition from the tape-like material was checked under the same method and conditions as in Example 1. As a result, it was visually confirmed that no bleeding of a resin composition from the tape-like material occurred on the roller surface.

(Example 3)

In this example, an epoxy resin composition consisting of the following components was used as the resin composition.

Component [A]: 100 parts by mass of "jER (registered trademark)" 828 was used as the epoxy resin.
Component [B]: 4.5 parts by mass of DICY7 was used as a curing agent to react with component [A], and 2 parts by mass of DCMU99 was used as a curing accelerator.

The complex viscosity of this epoxy resin composition was measured using the same measuring device and method as in Example 1. As a result, the complex viscosity at 0°C was 4 x $10^4$ Pa·s.

Next, one bundle (non-opened) of the same carbon fiber bundle as in Example 1 ("Torayca (registered trademark)" T800S-12K) was impregnated with this epoxy resin composition to obtain a towpreg with a resin content of 30% by mass. When the Tg of the epoxy resin composition was measured for this towpreg using the same measuring device and method as in Example 1, the Tg was found to be -25°C.

Using the same testing machine as in Example 1, the tape-like material was cooled to 0°C by a cooling mechanism. When tensile stress applied to the tape-like material was gradually increased from 0 MPa up to 2400 MPa, the presence or absence of partial yarn breakage of the tape-like material was evaluated. As a result, no partial yarn breakage occurred.

Furthermore, using the tape-like material described in Example 3 and cooling it to 0°C by a cooling mechanism, the presence or absence of bleeding of a resin composition from the tape-like material was checked under the same method and conditions as in Example 1. As a result, it was visually confirmed that no bleeding of a resin composition from the tape-like material occurred on the roller surface.

(Example 4)

Using the apparatus for producing a rotor sleeve shown in Fig. 2, the same tape-like material as in Example 1 was wound to form a laminate. In Fig. 2, a cylindrical rotor was arranged as the core. The tape-like material was unwound from the bobbin and wound around the outer periphery of the rotor via path configuration devices. As the path configuration devices, a multistage roll 5 and a nip roll 6 were provided. The unwinding speed of the tape-like material was 3 m/min, and a tensile stress of 2000 MPa was applied to the tape-like material using the multistage rolls 5 and the nip rolls 6.

At this time, no partial yarn breakage occurred in the tape-like material. In addition, a good laminate in which the tape-like material was wound around the core with high tensile stress was obtained.

(Example 5)

In this example, a rotor having a diameter of 150 mm and a width of 15 cm was used as the rotor to which the rotor sleeve is mounted. The rotor had a structure in which eight arc-shaped magnets obtained by dividing a circle forming the circumferential direction relative to the rotation axis into eight parts, were each attached to a shaft to form a ring shape. The tape-like material from Example 1 was used as the material constituting the laminate.

A laminate was formed on the rotor by winding the tape-like material while applying a tension of 400 N (tensile stress of 571 MPa) until the thickness reached 1 mm. The laminate thus mounted on the rotor was covered with a bagging film and subjected to pressure and heat-curing using an autoclave to mold a rotor sleeve, thereby producing a rotating electrical machine. The outer diameter of the rotor sleeve was 152 mm because the slit tape was wound to a thickness of 1 mm around the 150 mm- diameter rotor.

The rotating electrical machine produced by the above method was subjected to a rotation test in which it was rotated around the rotation axis at a rotation speed of 10,000 rpm, and the outer diameter of the ring before rotation and the displacement amount during the rotation test were measured. The rotation test was carried out according to the following procedure. The outer diameter of the rotor sleeve before rotation was measured using a diameter tape (manufactured by Nihon Dokki Co., Ltd.) and confirmed to be 152 mm as described above. An air-turbine type spin tester was used as the rotating means to rotate the produced rotating electrical machine from a stationary state, and the rotation speed was gradually increased until it reached 10,000 rpm and then held for 20 seconds or more. The displacement amount of the outer diameter during the rotation test was measured using a laser displacement meter (manufactured by KEYENCE Corporation) while rotating the rotating electrical machine, 20 seconds after the rotation speed reached 10,000 rpm. The average value of each displacement amount at each measurement location in the circumferential direction was read and taken as the displacement amount. The position of each measurement location was as described in the section "Method of Calculating Displacement during Rotation of Rotating Electrical Machine". As a result, the rate of change in outer diameter of the rotor sleeve was 0.1% or less, thereby confirming the displacement suppression effect.

(Example 6)

The rotor described in Example 5 was used, and the same material as in Example 1 was used as the tape-like material constituting the laminate.

The tape-like material slit tape was wound on the rotor while applying a tension of 1500 N (tensile stress of 2143 MPa) until the thickness reached 1 mm to form a laminate. A rotor sleeve was molded in the same manner as in Example 5 to produce a rotating electrical machine.

When the rotating electrical machine produced by the above method was subjected to a rotation test in the same manner as in Example 5, the rate of change in outer diameter of the rotor sleeve was 0.1% or less, thereby confirming the displacement suppression effect.

(Comparative Example 1)

The complex viscosity of the epoxy resin composition described in Example 3 was measured using the same measuring device and method as in Example 1. As a result, the complex viscosity at 25°C was 40 Pa·s.

Using the same testing machine as in Example 1 without using a cooling mechanism, after confirming that the temperature of the tape-like material was 25°C, the tape-like material described in Example 3 was subjected to a tensile stress gradually increased from 0 MPa up to 2200 MPa under the same conditions as in Example 1. When evaluating the presence or absence of partial yarn breakage of the tape-like material, partial yarn breakage occurred at the point when a tensile stress of 2200 MPa was applied.

In addition, using the tape-like material described in Example 3, the presence or absence of bleeding of a resin composition from the tape-like material was checked in the same manner and under the same conditions as in Example 1, except that a cooling mechanism was not used and the temperature of the tape-like material was confirmed to be 25°C. As a result, it was visually confirmed that the resin composition was bleeding from the tape-like material onto the roller surface.

Since partial yarn breakage occurred at a lower tensile stress than in any of the examples, anxiety regarding path travel at high tension is expected. Furthermore, even within a tensile stress range lower than 2200 MPa where yarn breakage does not occur, the conditions were such that bleeding of a resin composition was considered likely to occur upon unwinding from the bobbin or entering the stress application mechanism.

(Comparative Example 2)

The same testing machine and the same conditions as in Example 1 were used for the tape-like material described in Example 1, except that the tape-like material was heated using a heating mechanism and the material temperature at that time was confirmed to be 60°C. Tensile stress was gradually increased from 0 MPa up to 2200 MPa. Partial yarn breakage occurred in the tape-like material at the point when a tensile stress of 2200 MPa was applied. The complex viscosity at 60°C was $2 \times 10^2$ Pa·s.

Furthermore, using the tape-like material described in Example 1, the presence or absence of bleeding of a resin composition from the tape-like material was checked in the same manner as in Example 1, except that the tape-like material was heated using a heating mechanism and the material temperature at that time was confirmed to be 60°C. As a result, it was visually confirmed that the resin composition was bleeding from the tape-like material onto the roller surface.

(Comparative Example 3)

In this comparative example, the rotor described in Example 5 was used, and the same material as in Example 1 was used as the tape-like material constituting the laminate.

The tape-like material was wound on the rotor while applying a tension of 20 N (tensile stress of 29 MPa) until the thickness reached 1 mm to form a laminate. A rotor sleeve was molded in the same manner as in Example 5 to produce a rotating electrical machine.

When the rotating electrical machine produced by the above method was subjected to a rotation test in the same manner as in Example 5, the rate of change in outer diameter of the rotor sleeve was 0.3%, which is greater than 0.1%, and no displacement suppression effect was confirmed. This is considered to be due to insufficient tensile stress during winding.

[Table 1]

Table 1

| | | Example 1 | Example 2 | Example 3 | Comparative Example 1 | Comparative Example 2 |
|---|---|---|---|---|---|---|
| Form of Material | - | slit tape | slit tape | towpreg | towpreg | slit tape |

(continued)

|  |  | Example 1 | Example 2 | Example 3 | Comparative Example 1 | Comparative Example 2 |
|---|---|---|---|---|---|---|
| Temperature of Material (T) | °C | 25 | 14 | 0 | 25 | 60 |
| Distance between Gripped Parts | mm | 100 | 100 | 100 | 100 | 100 |
| Tg | °C | 3 | 3 | -25 | -25 | 3 |
| ΔT (T-Tg) | °C | 22 | 11 | 25 | 50 | 57 |
| Viscosity of Resin Composition at Temperature (T) of Material | Pa·s | $2\times10^5$ | $8\times10^6$ | $4\times10^4$ | 40 | $2\times10^2$ |
| Strand Strength of Fiber Bundle | MPa | 5880 |  |  |  |  |
| Tensile Stress | MPa | 0 - 2500 | 0 - 2900 | 0 - 2400 | 0 - 2200 | 0 - 2200 |

INDUSTRIAL APPLICABILITY

The rotor sleeve obtained by the present invention can be mounted on the outside of a rotor constituting a rotating electrical machine such as a generator or a motor, and can be used for the purpose of protecting the rotor containing magnets from destruction due to centrifugal force when the rotating electrical machine operates. According to the present invention, it is also possible to provide a rotating electrical machine comprising such a rotor sleeve and a rotor. Similarly, it can be used for the purpose of protecting a flywheel for energy storage from destruction due to centrifugal force. Furthermore, in the present invention, it is also possible to provide an electric mobility device equipped with such a rotating electrical machine.

The rotor sleeve obtained by the present invention can be preferably applied to, for example, the above-mentioned SPM type motor. Since the permanent magnets are prevented from falling off from the rotor due to centrifugal force during operation, the rotating electrical machine can be rotated at high speed. It can also be preferably applied to the above-mentioned IPM type motor, a winding type motor using electromagnets, a reluctance type motor using magnetic resistance, an induction type motor that does not use magnets, and the like. According to such a rotor sleeve, since destruction of electrical steel sheets and the like due to centrifugal force during operation is suppressed, the rotating electrical machine can be rotated at high speed.

REFERENCE SIGNS LIST

1     laminate
2     winding direction of material
3     core
4     bobbin
5     multistage roll
6     nip roll
7     stress application mechanism
8     arrow indicating the rotation direction of the core
9     cooling mechanism
10    outer diameter of rotor sleeve
11    thickness of rotor sleeve

**Claims**

1. A method of producing a rotor sleeve, comprising: applying tensile stress to a material including a resin composition and a reinforcing fiber bundle, causing the material to travel along a predetermined path, and then winding the material annularly a plurality of times to form a cylindrical laminate,

   wherein a tensile stress P of 300 MPa or more and 4000 MPa or less is applied to the material from a certain point in the path, and

the path in which the tensile stress P is applied includes a region satisfying $\Delta T < 30°C$, where $\Delta T$ is a difference between T and Tg represented by the following formula (I), T is a temperature of the material while the tensile stress P is applied, and Tg is a glass transition temperature of the resin composition included in the material:

$$(I)\ \Delta T = T - Tg$$

2. The method of producing a rotor sleeve according to claim 1, wherein the tensile stress P is in a range of 300 MPa or more and 3300 MPa or less.

3. The method of producing a rotor sleeve according to claim 1, wherein the tensile stress P is in a range of 300 MPa or more and 2700 MPa or less.

4. The method of producing a rotor sleeve according to any one of claims 1 to 3, wherein the condition $\Delta T < 30°C$ is satisfied in the entire path in which the tensile stress P is applied.

5. The method of producing a rotor sleeve according to any one of claims 1 to 4, wherein while the tensile stress P is applied, a complex viscosity of the resin composition included in the material is $10^4$ Pa·s or more and $10^8$ Pa·s or less.

6. The method of producing a rotor sleeve according to any one of claims 1 to 5, comprising a stress application step of increasing the tensile stress to a desired tensile stress P.

7. The method of producing a rotor sleeve according to claim 6, wherein at least a part of the material is cooled to 20°C or less prior to the stress application step and/or during the stress application step.

8. A rotating electrical machine comprising a rotor and a rotor sleeve,

   wherein the rotor sleeve is formed by winding a material including a resin composition and a reinforcing fiber bundle annularly a plurality of times around the rotor to form a cylindrical laminate having an outer diameter of 6 cm or more and 23 cm or less, and
   a rate of change in outer diameter when operated at a rotation speed of 10,000 rpm is 0.1% or less.

9. The rotating electrical machine according to claim 8, having a single output density of 8 kW/kg or more.

10. An electric mobility device equipped with the rotating electrical machine according to claim 9.

【Fig. 1 】

【Fig. 2 】

【Fig. 3】

# EP 4 773 476 A1

## INTERNATIONAL SEARCH REPORT

| | International application No. |
|---|---|
| | **PCT/JP2024/037906** |

### A. CLASSIFICATION OF SUBJECT MATTER

*H02K 1/278*(2022.01)i; *B29C 70/32*(2006.01)i; *B29C 70/68*(2006.01)i; *H02K 15/02*(2025.01)i; *H02K 15/035*(2025.01)i
FI: H02K1/278; B29C70/32; B29C70/68; H02K15/02 K; H02K15/02 A

According to International Patent Classification (IPC) or to both national classification and IPC

### B. FIELDS SEARCHED

Minimum documentation searched (classification system followed by classification symbols)

H02K1/278; B29C70/32; B29C70/68; H02K15/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-91202 A (KAWASAKI JUKOGYO KABUSHIKI KAISHA) 11 May 2015 (2015-05-11) <br> entire text, all drawings | 1-10 |
| A | JP 2015-144550 A (FANUC CORPORATION) 06 August 2015 (2015-08-06) <br> entire text, all drawings | 1-10 |
| A | JP 2016-82773 A (FANUC CORPORATION) 16 May 2016 (2016-05-16) <br> entire text, all drawings | 1-10 |
| A | JP 2017-195695 A (DMG MORI SEIKI CO., LTD.) 26 October 2017 (2017-10-26) <br> entire text, all drawings | 1-10 |
| A | JP 7337289 B2 (NITTA CORPORATION) 01 September 2023 (2023-09-01) <br> entire text, all drawings | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 December 2024** | **17 December 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
|---|
| **PCT/JP2024/037906** |

**C.    DOCUMENTS CONSIDERED TO BE RELEVANT**

| Category* | Citation of document, with indication, where appropriate, of the relevant passages | Relevant to claim No. |
|---|---|---|
| A | JP 2019-106875 A (DR. ING. H. C. F. PORSCHE AKTIENGESELLSCHAFT) 27 June 2019 (2019-06-27)<br>entire text, all drawings | 1-10 |

Form PCT/ISA/210 (second sheet) (July 2022)

**INTERNATIONAL SEARCH REPORT**
Information on patent family members

International application No.

**PCT/JP2024/037906**

| Patent document cited in search report | | | Publication date (day/month/year) | Patent family member(s) | | | Publication date (day/month/year) |
|---|---|---|---|---|---|---|---|
| JP | 2015-91202 | A | 11 May 2015 | (Family: none) | | | |
| JP | 2015-144550 | A | 06 August 2015 | US | 2015/0188369 | A1 | |
| | | | | entire text, all drawings | | | |
| | | | | DE | 102014119131 | A1 | |
| | | | | CN | 204391925 | U | |
| | | | | CN | 104753216 | A | |
| JP | 2016-82773 | A | 16 May 2016 | US | 2016/0111926 | A1 | |
| | | | | entire text, all drawings | | | |
| | | | | DE | 102015117373 | A1 | |
| | | | | CN | 105529850 | A | |
| JP | 2017-195695 | A | 26 October 2017 | (Family: none) | | | |
| JP | 7337289 | B2 | 01 September 2023 | US | 2023/0416474 | A1 | |
| | | | | entire text, all drawings | | | |
| | | | | EP | 4254748 | A1 | |
| | | | | CN | 116670983 | A | |
| | | | | KR | 10-2023-0110794 | A | |
| JP | 2019-106875 | A | 27 June 2019 | US | 2019/0181709 | A1 | |
| | | | | entire text, all drawings | | | |
| | | | | DE | 102017129212 | A1 | |
| | | | | CN | 109904961 | A | |
| | | | | CN | 114884246 | A | |

Form PCT/ISA/210 (patent family annex) (July 2022)

**EP 4 773 476 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008047767 A
- JP 2005238688 A
- JP 2023151124 A